# FASCICULE DE BREVET EUROPEEN

(11) **EP 1 404 995 B1**
(45) Date de publication et mention de la délivrance du brevet: **01.02.2006**
(21) Numéro de dépôt: 02767560.2
(22) Date de dépôt: 10.07.2002
(51) Int. Cl.: F16K 11/085, F01P 7/16, B60H 1/00

(54) **VANNE DE COMMANDE POUR UN CIRCUIT DE REFROIDISSEMENT**
STEUERVENTIL FÜR KÜHLKREISLAUF
CONTROL VALVE FOR COOLING CIRCUIT

(30) Priorité: 11.07.2001 FR 0109221
(43) Date de publication de la demande: 07.04.2004
(73) Titulaire: VALEO THERMIQUE MOTEUR, 78321 La Verrière (FR)
(72) Inventeur: CHANFREAU, Matthieu, F-78650 Saulx Marchais (FR); VIREY, Daniel, F-78690 Les Essarts le Roi (FR)
(86) Numéro de dépôt international: PCT/FR2002/002431
(87) Numéro de publication internationale: WO 2003/006857

(56) Documents cités:
- EP-A- 0 688 986
- FR-A- 2 800 125
- GB-A- 2 051 311
- US-A- 5 529 026
- US-B1- 6 185 757
- US-B1- 6 230 668

## Description

L'invention se rapporte à une vanne de commande pour un circuit de refroidissement d'un moteur thermique de véhicule automobile, ainsi qu'au circuit ainsi obtenu.

Le document US-A-5 529 026 décrit une vanne conforme au préambule de la revendication 1.

De manière classique, le fluide de refroidissement est de l'eau additionnée d'un antigel, qui circule en circuit fermé sous l'action d'une pompe de circulation.

Un tel circuit de refroidissement utilise, de manière classique, une vanne thermostatique qui comprend une entrée de fluide reliée à la sortie du moteur et deux sorties de fluide qui correspondent, respectivement, à la branche contenant le radiateur de refroidissement et à la branche formant dérivation.

Lors du démarrage à froid du moteur, et tant que la température du fluide de refroidissement n'atteint pas un certain seuil, la vanne fait circuler le fluide de refroidissement dans la branche de dérivation en court-circuitant le radiateur de refroidissement. Dès que la température du fluide de refroidissement atteint et dépasse le seuil précité, le fluide de refroidissement traverse le radiateur de refroidissement et contourne la branche de dérivation.

Généralement, le fluide de refroidissement circule en permanence dans la branche qui contient l'aérotherme, le chauffage de l'habitacle étant alors obtenu par mixage d'un flux d'air froid et d'un flux d'air chaud qui a balayé cet aérotherme. Il est connu aussi de prévoir une vanne séparée sur l'aérotherme pour régler le débit de fluide de refroidissement qui le traverse.

Ainsi, les dispositifs de refroidissement connus nécessitent des moyens complexes pour réaliser la distribution du fluide de refroidissement entre les trois branches précitées, en fonction des conditions de fonctionnement du moteur et des conditions de confort souhaitées par le ou les occupants du véhicule.

L'un des buts de l'invention est de procurer une vanne permettant de gérer de façon indépendante les débits du fluide de refroidissement dans les différentes branches du circuit de refroidissement du moteur.

L'invention vise aussi à réaliser une telle vanne qui permet d'optimiser et d'améliorer les différentes fonctions, notamment lors de la montée en température du moteur thermique et lorsqu'un chauffage de l'habitacle est souhaité, et aussi en cas de surchauffe du moteur.

L'invention vise aussi à procurer une telle vanne qui possède un fonctionnement motorisé et qui possède un fonctionnement plus sûr que les vannes thermostatiques classiques.

L'invention propose à cet effet une vanne de commande selon la revendication 1.

Cependant, il doit être compris que l'organe de réglage peut être amené directement dans l'une des positions précédentes en fonction d'un mode particulier souhaité.

Avantageusement, l'organe de réglage est propre à prendre, en outre, une position "sécurité" qui correspond soit à la position "radiateur", en laquelle la deuxième sortie est ouverte, soit à la position "radiateur + aérotherme", en laquelle la deuxième sortie et la troisième sortie sont ouvertes.

Ces positions de sécurité favorisent le refroidissement du moteur en permettant de dissiper la chaleur du moteur, soit au travers du radiateur seul, soit au travers du radiateur et de l'aérotherme.

Selon une autre caractéristique de l'invention, la vanne de commande comprend des moyens de commande propres à amener l'organe de réglage :
soit dans l'une des positions : "dérivation", "radiateur + dérivation", "radiateur", lorsqu'un mode sans chauffage est désiré,
soit dans l'une des positions : "radiateur + aérotherme", "radiateur + dérivation + aérotherme", "aérotherme + dérivation", "aérotherme", lorsqu'un mode avec chauffage est désiré.

Selon encore une autre caractéristique de l'invention, les sorties de fluide débouchent dans le corps par des ouvertures de formes et de dimensions choisies, aménagées en des emplacements choisis dudit corps.

De manière préférentielle, les ouvertures des sorties de fluide sont de forme générale circulaire et ont des diamètres différents.

Dans une forme de réalisation préférée de l'invention, le corps comprend une paroi latérale cylindrique dans laquelle débouchent les sorties de fluide à des hauteurs axiales et en des positions angulaires choisies par rapport à l'axe de rotation de l'organe de réglage, tandis que l'entrée de fluide débouche axialement dans le corps.

Il est cependant possible d'envisager une forme de réalisation où les entrées et les sorties sont inversées sur le corps ; par exemple, le corps peut comprendre trois entrées de fluide et une sortie.

Dans une forme de réalisation préférée de l'invention, l'organe de réglage est réalisé sous la forme d'un cylindre creux comprenant des ouvertures de passage propres à contrôler les sorties de fluide en fonction de la position angulaire de l'organe de réglage par rapport au corps.

Il est cependant possible d'envisager d'autres types d'organes de réglage, et en particulier un organe du type disque.

Selon encore une autre caractéristique de l'invention, la vanne de commande comprend des moyens de motorisation propres à entraîner l'organe de réglage pour l'amener dans des positions angulaires choisies par rapport au corps de vanne. Ces moyens de motorisation peuvent comprendre, par exemple, un moteur du type pas à pas ou à courant continu.

Sous un autre aspect, l'invention concerne un circuit de refroidissement d'un moteur thermique de véhicule automobile, qui est parcouru par un fluide de refroidissement sous l'action d'une pompe de circulation, ce circuit comprenant une vanne de commande telle que définie précédemment, dont l'entrée de fluide est reliée à une arrivée de fluide de refroidissement en provenance du moteur et dont les première sortie de fluide, deuxième sortie de fluide et la ou les troisièmes sorties de fluide sont reliées, respectivement, à une première branche qui contient le radiateur de refroidissement du moteur, une deuxième branche qui constitue la dérivation du radiateur de refroidissement, et une ou plusieurs troisièmes branches qui contiennent chacune au moins un aérotherme pour le chauffage de l'habitacle.

Dans une forme de réalisation préférée de l'invention, ce circuit comprend une pompe de circulation mécanique entraînée par le moteur et/ou une pompe de circulation électrique susceptible d'être actionnée par des moyens de commande.

De préférence, la pompe de circulation électrique est intercalée sur la troisième branche qui contient l'aérotherme, et les moyens de commande sont propres à actionner la pompe de circulation électrique dans l'une des positions suivantes : position "aérotherme", position "radiateur + aérotherme" et position "radiateur + dérivation + aérotherme".

Selon un mode de réalisation le circuit conforme à l'invention pourra comprendre deux ou trois troisièmes branches contenant chacune au moins un aérotherme.

Un tel mode de réalisation trouvera particulièrement ses applications dans des véhicules dans lesquels on veut moduler la répartition de la chaleur à l'intérieur de l'habitacle du véhicule. Il est alors avantageux de pouvoir régler la chaleur dégagée par chacun des aérothermes. Pour cela, jusqu'à maintenant, on régulait la quantité de fluide passant dans les aérothermes à l'aide d'actionneurs distincts intervenant sur chacune desdites troisièmes branches, les actionneurs étant généralement situés au niveau d'un boîtier de climatisation intégrant les aérothermes.

Dans un tel circuit, selon un mode avantageux de réalisation de la vanne conforme à l'invention, on pourra régler la chaleur dégagée par chaque aérotherme sans avoir recours aux dits actionneurs.

Pour cela ladite vanne est munie pour chaque troisième branche d'une troisième sortie correspondante en communication avec ladite troisième branche et l'organe de réglage est apte à prendre des positions supplémentaires en lesquelles lesdites troisièmes sorties sont ouvertes ou non, de façon sélective. On pourra ainsi, en fonction de la position angulaire dudit organe, alimenter seulement l'une, plusieurs ou toutes lesdites troisièmes branches.

Dans la description qui suit, faite seulement à titre d'exemple, on se réfère aux dessins annexés, sur lesquels :
- la Figure 1 est une vue en perspective éclatée d'une vanne de commande selon l'invention ;
- la Figure 2 est un schéma d'un circuit de refroidissement d'un moteur thermique de véhicule automobile, équipé d'une vanne de commande selon l'invention ;
- la Figure 3 illustre schématiquement les ouvertures par lesquelles débouchent les trois sorties de la vanne dans le corps de vanne ;
- la Figure 4 est un schéma montrant une séquence de positions de la vanne dans une première forme de réalisation de l'invention ;
- la Figure 5 est un schéma analogue dans une variante de réalisation ;
- la Figure 6 est un schéma analogue dans une autre variante de réalisation ;
- la Figure 7 est une courbe de référence montrant la progressivité de l'ouverture de la sortie de vanne qui correspond au radiateur ;
- la Figure 8 est un schéma analogue à celui de la Figure 4 dans une autre forme de réalisation de l'invention ; et
- la Figure 9 est un organigramme illustrant le fonctionnement de la vanne de l'invention.

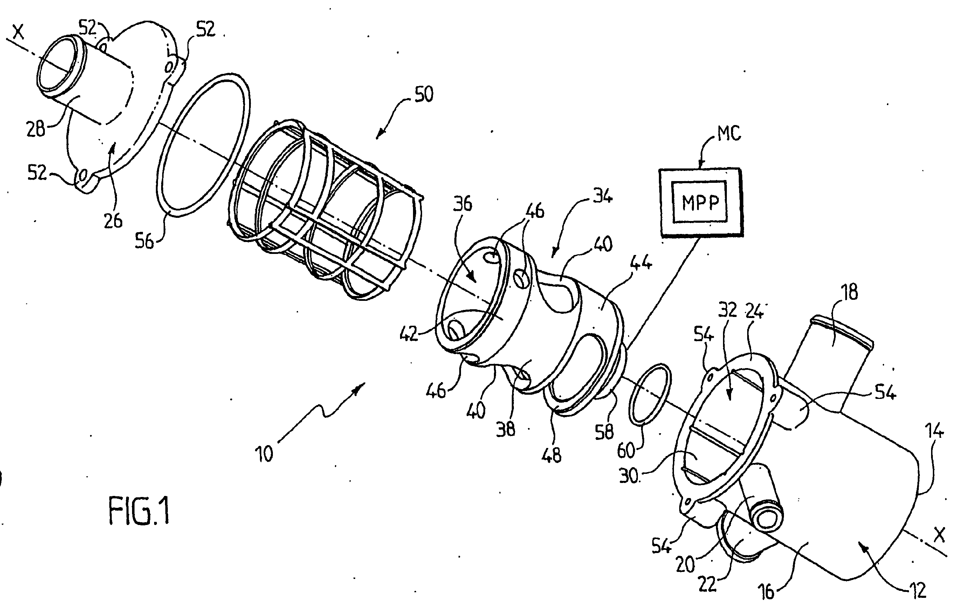

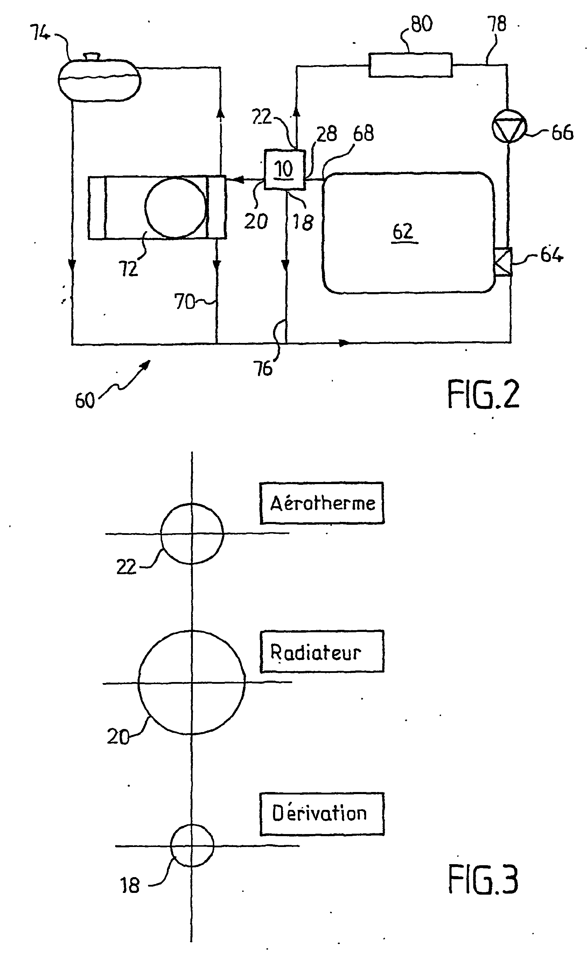

La vanne de commande 10 représentée à la Figure 1 comprend un corps 12 de forme générale cylindrique, délimité par une paroi de fond 14 et une paroi cylindrique 16 d'axe XX. Dans la paroi latérale cylindrique 16, débouchent trois tubulures de sortie 18, 20 et 22 à des hauteurs axiales et en des positions angulaires choisies par rapport à l'axe XX. Dans l'exemple, les tubulures 18, 20 et 22 débouchent radialement dans la paroi 16 et elles ont des diamètres différents, comme on peut le voir aussi sur la Figure 3.

Sur la Figure 3, qui est une représentation de principe, les ouvertures correspondant aux tubulures 18, 20 et 22 sont alignées alors que, dans la réalité, elles sont décalées angulairement comme le montre la Figure 1.

Le corps de vanne 12 comporte une face ouverte circulaire 24 destinée à être fermée par un couvercle 26 qui est muni d'une tubulure 28 d'entrée de fluide, dirigée dans la direction de l'axe XX. La paroi latérale 16 du corps 12 présente une surface cylindrique interne 30 délimitant un logement 32 pour un organe de réglage 34. Ce dernier définit une cavité intérieure 36 propre à être alimentée en fluide par la tubulure d'entrée 28 de la vanne.

L'organe de réglage 34 est réalisé sous la forme d'un cylindre creux propre à tourner autour de l'axe de rotation XX. Il présente une surface cylindrique intermédiaire 38 munie de deux ouvertures de passage 40 et encadrée par deux autres surfaces cylindriques 42 et 44 situées en extrémité. La surface cylindrique 42 est munie de deux ouvertures de passage 46, tandis que la surface cylindrique 44 est munie d'une ouverture de passage 48. L'organe de réglage est propre à prendre différentes positions angulaires sous l'action de moyens de commande MC (représentés schématiquement) qui comprennent une motorisation, par exemple un moteur pas à pas MPP ou à courant continu. Ainsi, l'organe de réglage 34 peut être amené dans des positions angulaires très précises, ce qui permet de contrôler la distribution du fluide au travers des sorties 18, 20 et 22.

L'étanchéité entre l'organe de réglage 34 et la surface intérieure 30 de la paroi latérale 16 est assurée par un joint d'étanchéité 50 ayant la forme d'une cage cylindrique.

Le couvercle 26 est muni de trois pattes radiales 52 destinées à être traversées par des vis (non représentées) coopérant avec des bossages correspondants 54 que présente le corps de vanne.

Un joint d'étanchéité 56 de forme annulaire est disposé entre la face ouverte 24 du corps 12 et le couvercle 26. Par ailleurs, l'organe de réglage 34 se termine par un embout 58 entouré par un joint d'étanchéité 60, et propre à traverser une ouverture (non visible sur la Figure 1) que comporte le fond 14 du corps 12. De la sorte, l'organe de réglage 34 peut être entraîné en rotation par le moteur pas à pas MPP déjà cité.

On se réfère maintenant à la Figure 2 qui montre un circuit 60 pour le refroidissement d'un moteur thermique 62 de véhicule automobile. Le circuit 60 est parcouru par un fluide de refroidissement, typiquement de l'eau additionnée d'un antigel, qui circule sous l'action d'une pompe mécanique 64 entraînée par le moteur 62, éventuellement avec l'aide d'une pompe électrique 66. Le fluide échauffé par le moteur, quitte ce dernier par une sortie 68 qui est reliée à la tubulure d'entrée 28 d'une vanne de commande 10 du type décrit précédemment.

Cette vanne de commande comprend trois tubulures de sortie 18, 20 et 22 qui sont reliées respectivement à trois branches du circuit. Ce dernier comprend une première branche 70 qui contient un radiateur de refroidissement 72 du moteur 62 et un vase d'expansion 74, une deuxième branche 76 qui constitue une dérivation du radiateur de refroidissement 72, et une troisième branche 78 qui contient un aérotherme 80 pour le chauffage de l'habitacle du véhicule. La pompe électrique 66 est intercalée sur la branche 78 qui contient l'aérotherme 80.

La vanne 10 permet de gérer indépendamment les débits de fluide dans les branches 70, 76 et 78, afin d'optimiser la température du moteur thermique et le chauffage de l'habitacle, dans des conditions maximales de sécurité.

Les sorties 18, 20 et 22 de la vanne 10 sont reliées respectivement aux branches 76, 70 et 78. L'entrée 28 de la vanne 10 est, de préférence, reliée directement et axialement à la sortie 68 du moteur 62.

L'actionneur qui pilote l'organe de réglage 34 (dans l'exemple, le moteur pas à pas MPP) est, de préférence, un actionneur électrique qui possède un temps de réponse très faible, et dans tous les cas inférieur à 1 seconde. Il est alors alimenté par le réseau électrique du véhicule et est contrôlé par un simple fil, en analogique ou en numérique. Le diagnostic peut être sur le même fil que sur la consigne ou sur un fil indépendant en analogique ou numérique.

L'actionneur est muni d'un organe, par exemple un capteur, permettant de connaître sa position en temps réel, de façon à détecter toute dérive ou tout dysfonctionnement.

Comme on le voit sur la Figure 2, les trois sorties de fluide 18, 20 et 22 sont perpendiculaires à l'axe de rotation XX, tandis que l'entrée de fluide 28 est disposée axialement et en regard du moteur de façon à diminuer au maximum les pertes de charge, dans la position où la vanne est pleinement ouverte.

Dans tous les modes de réalisation, les sections de passage des tubulures sont dimensionnées pour permettre un bon écoulement du fluide, c'est-à-dire à section constante, sans coude et avec des formes progressives.

La sortie de fluide 20 (dérivation) est située le plus près de l'entrée de fluide 28, de façon à pouvoir intégrer la vanne 10 au moteur thermique 62, ce qui permet également de supprimer la pièce de raccord entre la sortie 68 du moteur 62 et l'entrée 28 de la vanne 10.

L'organe de réglage 34, piloté par l'actionneur MPP, oriente et distribue le débit du fluide de refroidissement. Celui-ci entre dans la cavité 36 de l'organe de réglage 34 via la tubulure d'entrée 28 et est réparti entre les trois sorties 18, 20 et 22 par la forme des ouvertures de passage 40, 46 et 48 de l'organe de réglage 34. A chaque position angulaire de l'organe de réglage 34 correspond une répartition bien définie.

Dans l'exemple représenté, les formes des ouvertures de passage de l'organe de réglage 34 sont délimitées par des arcs de cercle, mais elles peuvent être avantageusement modifiées pour obtenir une meilleure progressivité des débits.

On décrira maintenant la séquence des voies ou positions en référence à la Figure 1, sur laquelle la séquence des positions est représentée schématiquement et les ouvertures de passage 40, 46 et 48 de l'organe de réglage 34 sont représentées par des zones en grisé. Le cas représenté montre une séquence où les trois voies ou sorties sont disposées les unes au-dessus des autres, mais toutes les dispositions angulaires des trois sorties sont possibles en gardant la même séquence. Seul un recalage est nécessaire.

Si l'organe de réglage 34 est entraîné en rotation dans un sens donné par rapport au corps 12 de la vanne, l'organe est propre à définir la séquence de positions suivante :
- position "dérivation" P1, en laquelle la première sortie 18 est ouverte ;
- position "radiateur + dérivation" P2 ou P3, en laquelle la première sortie 18 et la deuxième sortie 20 sont ouvertes ;
- position "radiateur" P9 ou P10', en laquelle la deuxième sortie 20 est ouverte ;
- position "radiateur + aérotherme" P4 ou P10, en laquelle la deuxième sortie 20 et la troisième sortie 22 sont ouvertes ;
- position "radiateur + dérivation + aérotherme" P6 ou P7, en laquelle la première sortie 18, la deuxième sortie 20 et la troisième sortie 22 sont ouvertes ;
- position "aérotherme + dérivation" P5, en laquelle la première sortie 18 et la troisième sortie 22 sont ouvertes ;
- position "aérotherme" P5' ou P8, en laquelle la troisième sortie 22 est ouverte ; et
- position "débit nul" P0 ou P0', en laquelle aucune sortie n'est ouverte.

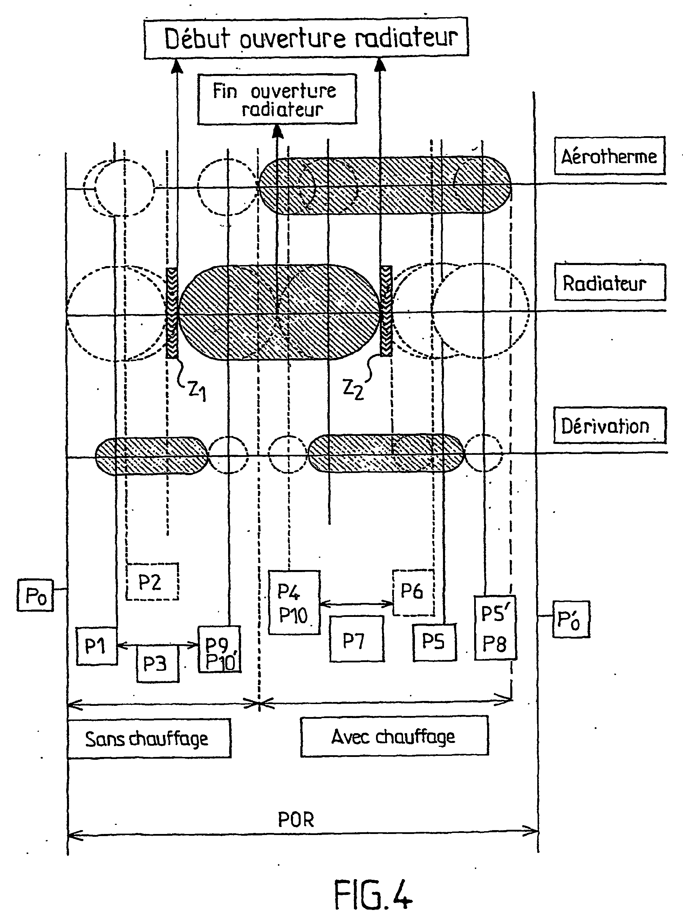

Les différentes positions précitées sont désignées par des rectangles sur la Figure 4. On constate que les trois premières positions précitées, à savoir les positions "dérivation", "radiateur + dérivation" et "radiateur" correspondent à un mode sans chauffage, tandis que les autres positions "radiateur + aérotherme", "radiateur + dérivation + aérotherme", "aérotherme + dérivation" et "aérotherme" correspondent à un mode avec chauffage.

On a également indiqué par des rectangles, en partie haute de la figure, le début de l'ouverture du radiateur et la fin de l'ouverture du radiateur. Des zones d'étanchéité Z1 et Z2 sont situées entre les branches radiateur ouvert et radiateur fermé. Le périmètre de l'organe de réglage est désigné schématiquement par les lettres POR.

Les séquences d'opérations sont reprises dans le Tableau 1 suivant.

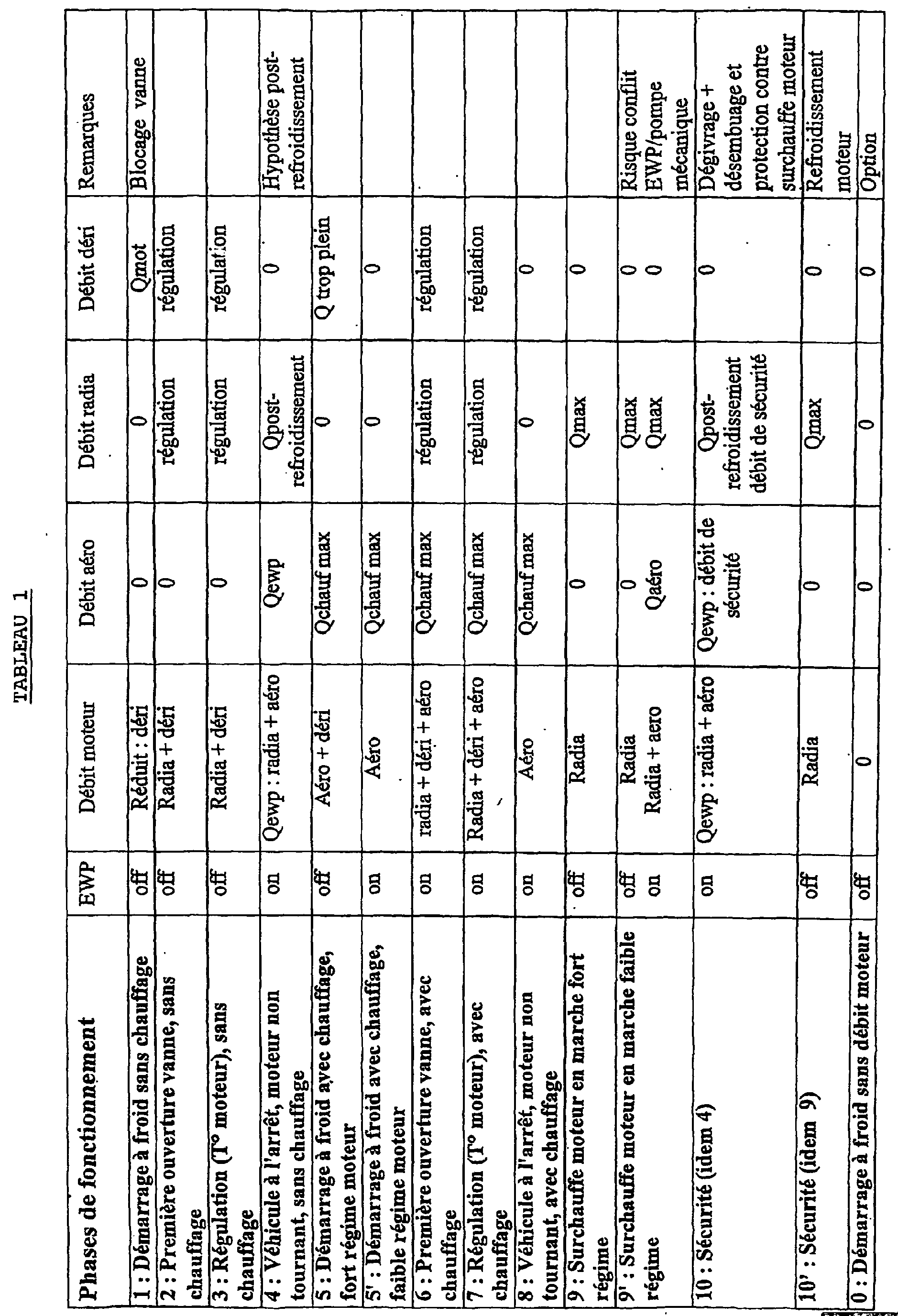

Dans ce tableau, la première colonne représente les différentes phases ou modes de fonctionnement du système, la deuxième colonne représente le fonctionnement (on) ou l'arrêt (off) de la pompe à eau électrique EWP, là troisième colonne représente le débit moteur, la quatrième le débit aérotherme, la cinquième colonne le débit radiateur, la sixième colonne le débit dérivation et la septième colonne des remarques. Il est à noter que l'organe de réglage peut prendre une position "sécurité" P10 ou P10' qui correspondent respectivement à la position "radiateur + aérotherme", en laquelle la deuxième sortie 20 et la troisième sortie 22 sont ouvertes et à la position "radiateur", en laquelle la deuxième sortie 20 est ouverte.

Ce mode de fonctionnement favorise le refroidissement du moteur en permettant la dissipation de la chaleur du moteur, soit au travers du radiateur seul, soit au travers du radiateur et de l'aérotherme.

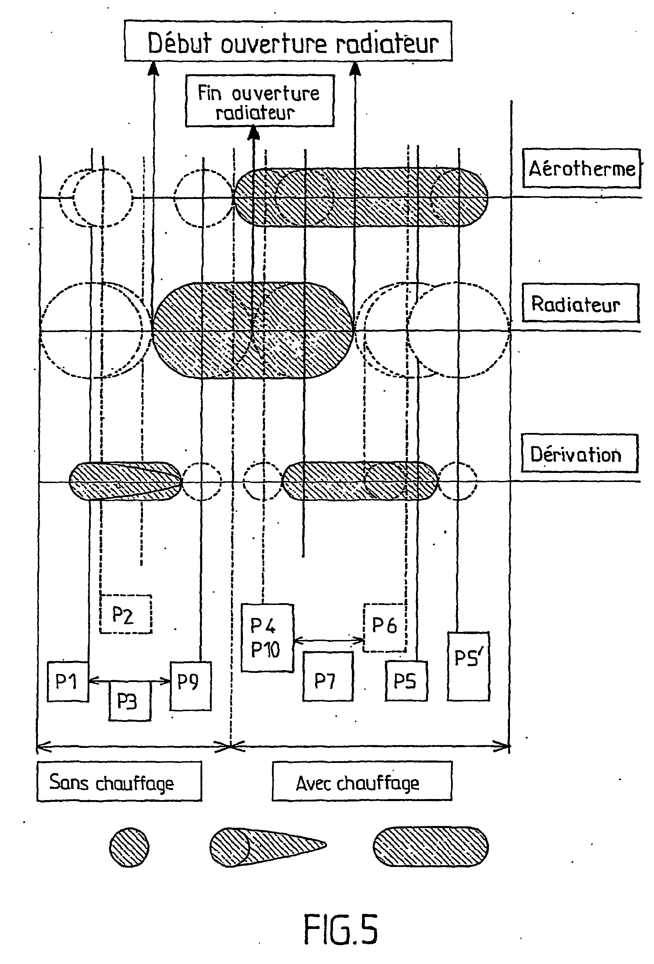

La Figure 5 est une représentation analogue à la Figure 4. Elle diffère de cette dernière essentiellement par le fait que les zones d'étanchéité Z1 et Z2 ont été supprimées. D'autre part, les formes des ouvertures correspondant à la dérivation ont été sensiblement modifiées.

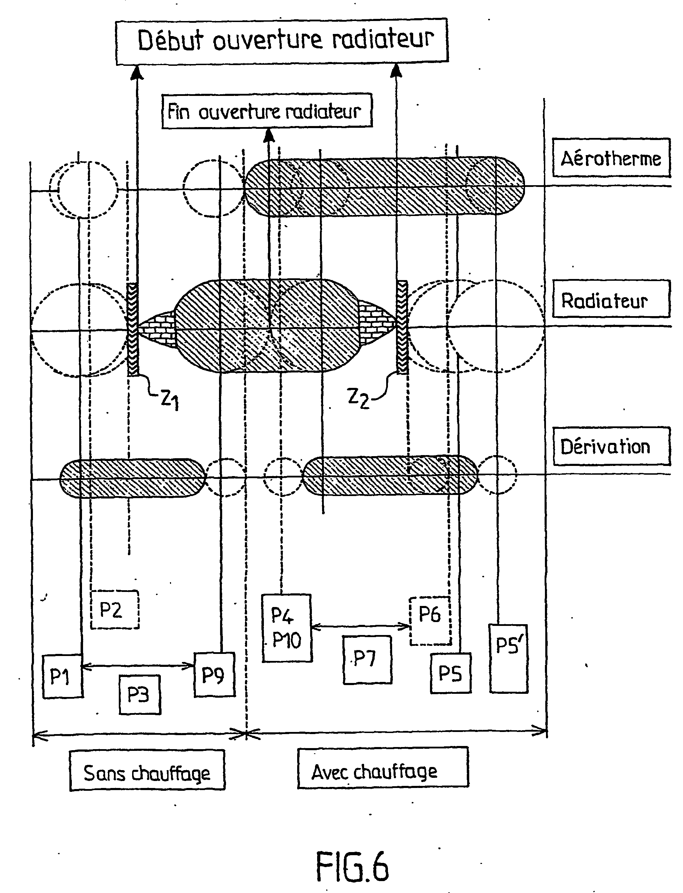

La Figure 6 correspond à une variante de la Figure 4. Les zones d'étanchéité Z1 et Z2 sont conservées mais la forme de l'ouverture qui correspond au radiateur a été modifiée pour améliorer la progressivité.

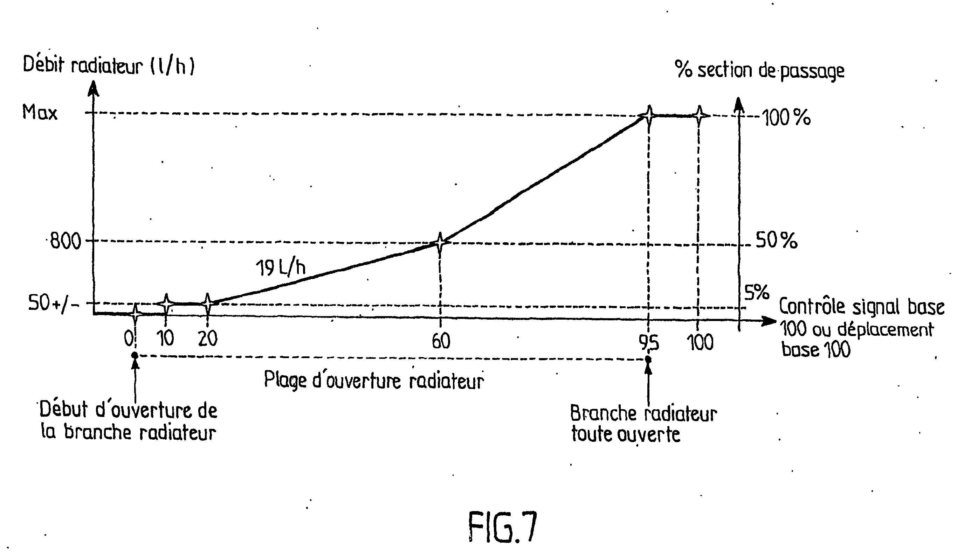

On se réfère maintenant à la Figure 7 qui montre une courbe de progressivité de l'ouverture de la sortie 20 (sortie radiateur) de la vanne 10 en fonction d'un signal de commande à base 100.

Cet exemple de réalisation correspond à des sections de passage ayant les diamètres suivants : 20 mm pour la sortie 20 (radiateur), 20 mm pour la sortie 18 de la dérivation et 28 mm pour l'entrée de fluide 28.

La progressivité est établie ici pour un fonctionnement avec une pression de 1 bar et avec une température du fluide de refroidissement de 23°C ± 2°C. Le débit du radiateur augmente progressivement depuis le début d'ouverture de la sortie radiateur (sortie 18) jusqu'à l'ouverture complète qui correspond à 100 % de la section de passage. La courbe est ici à base de segments de droites qui se raccordent les uns aux autres, mais elle pourrait aussi être formée d'une seule droite ou d'un polynôme.

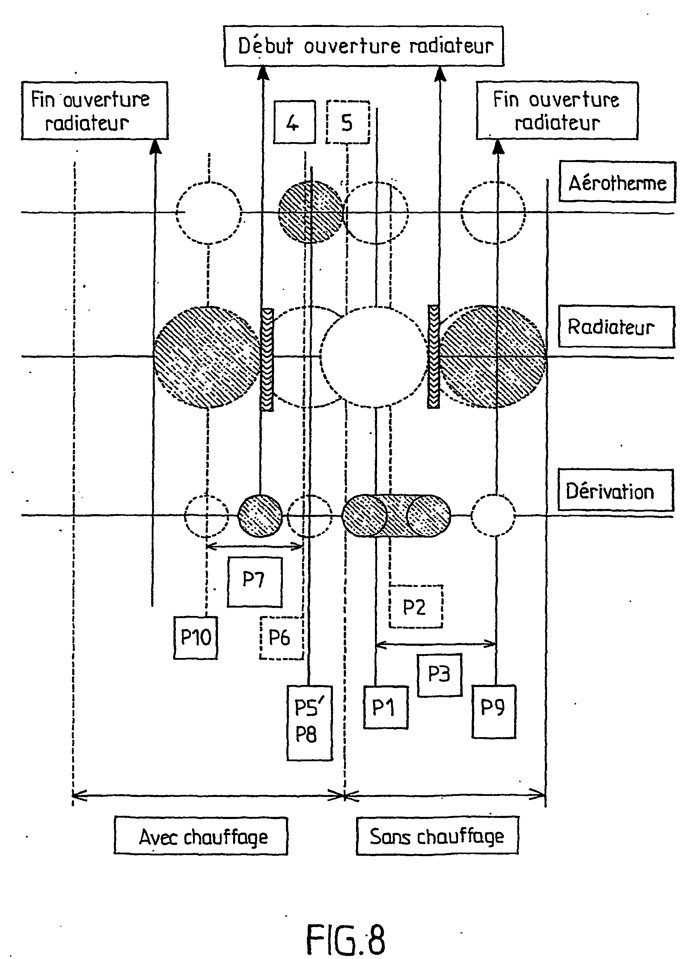

On se réfère maintenant à la Figure 8 qui montre une autre séquence de fonctionnement simplifié, qui débute ici par un mode avec chauffage et se termine ensuite par un mode sans chauffage. Les différentes positions sont désignées par les mêmes symboles P1, P2, etc. que sur les Figures 4 à 6.

On retrouve là aussi les zones d'étanchéité Z1 et Z2 entre les branches radiateur ouvert et radiateur fermé. Le fonctionnement correspondant est illustré par le Tableau 2 suivant, dans lequel les intitulés des colonnes sont les mêmes que dans le Tableau 1 mentionné plus haut. Le Tableau 2, correspondant à la Figure 8, montre une séquence qui permet de passer en douceur d'une régulation avec demande de chauffage à une régulation sans demande de chauffage.

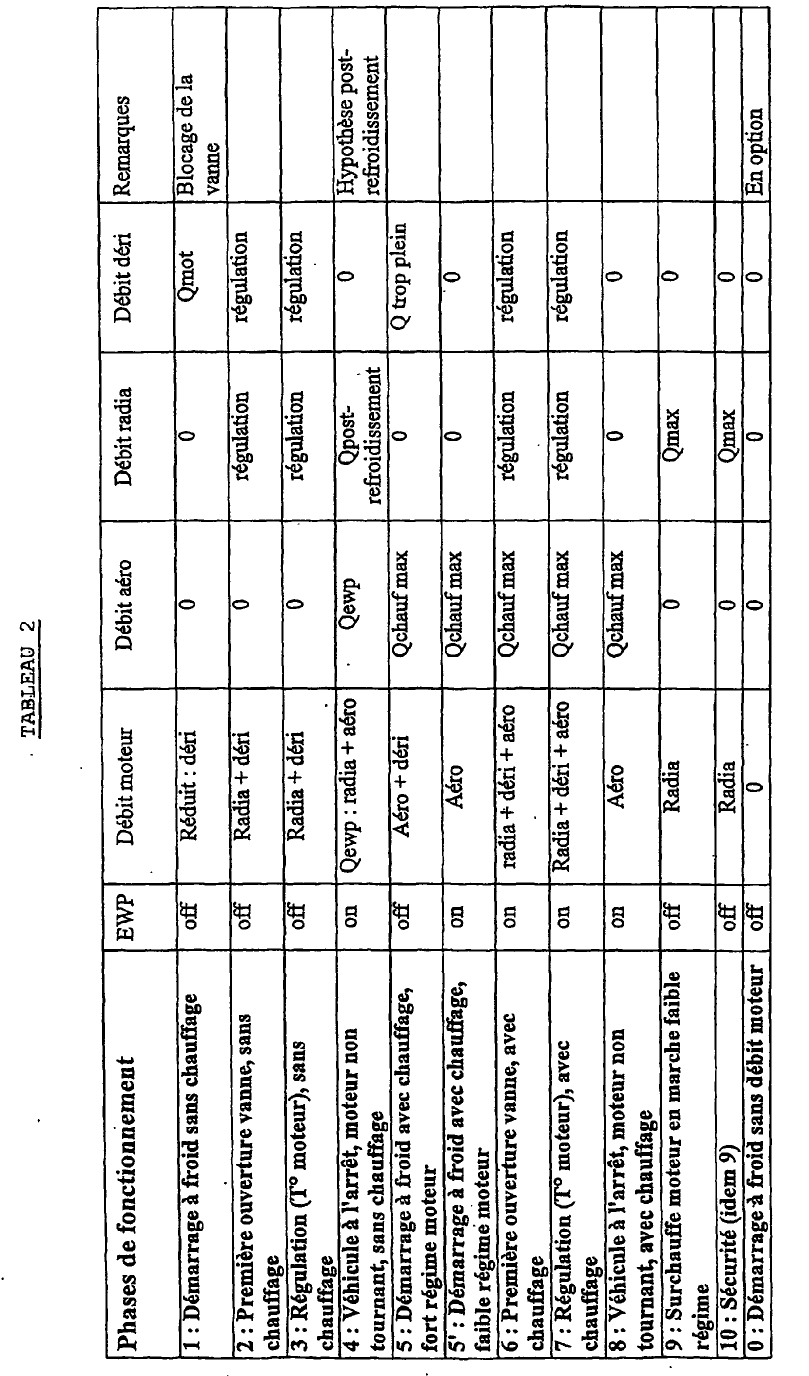

Les sections de passage de la vanne, lorsqu'au moins deux branches sont en communication, sont calculées de façon à limiter la différence de pression entre l'entrée et la sortie de la vanne, au-dessous de 1 bar, afin de ne pas créer un couple trop important, supérieur à 1 Nm, au niveau de l'actionneur.

La séquence d'opérations du Tableau 2, de même que celle du Tableau 1, peut être réalisée soit avec un organe de réglage 34 du type cylindre creux comme décrit précédemment, soit encore avec tout autre type d'organe de réglage, en particulier un organe du type à disque.

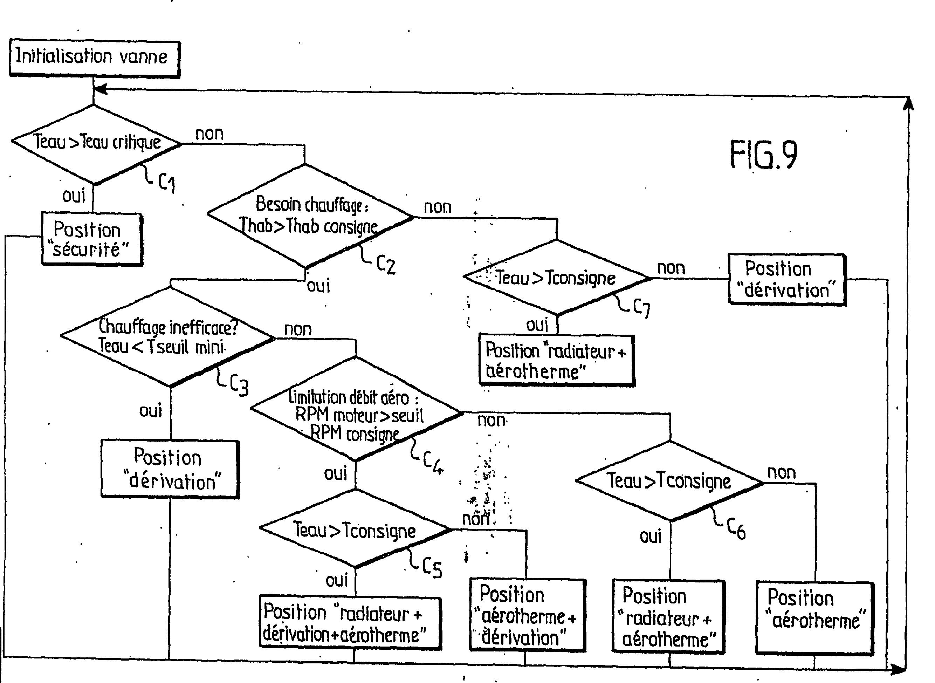

On se réfère maintenant à la Figure 9 qui représente un organigramme de fonctionnement des moyens de commande associés à la vanne 10.

L'organigramme montre que la vanne 10 est initialisée dans une position connue avant régulation. Des premiers moyens de comparaison C1 permettent de comparer la température du fluide de refroidissement T eau par rapport à une température critique T eau critique qui correspond à la valeur maximale supportable par le moteur en fonction de la température dite "matière" qui correspond à la température du moteur. Dans tous les cas, la température critique du fluide de refroidissement doit rester inférieure à sa température d'ébullition. Dans l'exemple, le fluide de refroidissement est considéré comme étant de l'eau additionnée d'un antigel.

Ces premiers moyens de comparaison C1 comparent T eau à T eau critique. Si T eau est supérieure à T eau critique, les moyens de commande amènent la vanne automatiquement en position "sécurité" pour favoriser le refroidissement du moteur et le désembuage de l'habitacle, si nécessaire.

Dans la négative, des seconds moyens de comparaison C2, qui déterminent le besoin en chauffage, comparent la température de l'habitacle T hab à une température T hab consigne. T hab représente la température mesurée dans l'habitacle, tandis que T hab consigne représente une consigne de température habitacle.

Si T hab est supérieure à T hab consigne, des troisièmes moyens de comparaison C3 déterminent si le chauffage est inefficace, en comparant la température T eau à une température seuil minimal T seuil mini qui correspond à la température minimale du liquide de refroidissement moteur, en dessous de laquelle il n'est pas utile de faire circuler de l'eau dans l'aérotherme, la montée en température, moteur étant alors privilégiée.

Si T eau est inférieure à T seuil mini, alors la vanne est amenée dans la position "dérivation" P1 ou dans une position "débit nul" P0 ou P04 fermant les trois voies et arrêtant complètement le débit moteur.

Dans la négative, des quatrièmes moyens de comparaison C4, qui déterminent la limitation du débit aérotherme, comparent le régime moteur RPM moteur à un seuil RPM consigne.

Si RPM moteur est supérieur au seuil RPM consigne, des moyens de comparaison C5 comparent la température T eau à une température consigne T consigne, laquelle correspond à une température de consigne de température d'eau élaborée par le calculateur de refroidissement moteur ou le calculateur moteur en fonction de paramètres divers qui correspondent au moteur et au véhicule. Ces paramètres peuvent comprendre notamment la charge moteur (pression d'admission, position papillon ou pédale, régime moteur, vitesse du véhicule, fonctionnement de la climatisation, pression du fluide de réfrigération, température extérieure...).

Si T eau est supérieure à T consigne, la vanne est amenée en position "radiateur + dérivation + aérotherme" (position P6).

Dans la négative, la vanne est amenée dans une position "aérotherme + dérivation".

Dans le cas où RPM moteur est inférieur au seuil RPM consigne, des moyens de comparaison C6 comparent T eau à T consigne. Si T eau supérieure à T consigne, la vanne est amenée en position "aérotherme + radiateur" P7. Dans la négative, la vanne est amenée en position "aérotherme", c'est-à-dire P8 ou P5'.

Dans le cas où T hab est inférieure à T hab consigne, des moyens de comparaison C7 comparent T eau à T consigne. Si T eau supérieure à T consigne, la vanne est amenée dans une position "radiateur + .aérotherme", c'est-à-dire dans une position P3 comprise entre P1 et P9. Dans la négative, la vanne est amenée dans la position "dérivation" qui correspond à la position P1.

Bien entendu, l'invention est susceptible de variantes de réalisation. En particulier, l'organe de réglage n'est pas limité à un cylindre creux ; il peut être plein et tronqué par un plan.

## Revendications

1. Vanne de commande propre à faire partie d'un circuit de refroidissement d'un moteur thermique de véhicule automobile, le circuit étant parcouru par un fluide de refroidissement et comprenant une première branche (70) qui contient le radiateur de refroidissement (72) du moteur (62), une deuxième branche (76) qui constitue une dérivation du radiateur de refroidissement (72) du moteur, et une ou des troisièmes branches (78) qui contiennent chacune au moins un aérotherme (80) pour le chauffage de l'habitacle,
la vanne (10) comprenant un corps ayant une entrée de fluide (28), une première sortie (18) pouvant être reliée à la deuxième branche (76), une deuxième sortie (20) pouvant être reliée à la première branche (70) et une ou des troisièmes sorties (22) pouvant être reliées à la ou aux troisièmes branches (78), ainsi qu'un organe de réglage (34) monté en rotation dans le corps de vanne pour contrôler sélectivement les sorties (18, 20, 22), **caractérisé en ce que** l'organe de réglage (34) est propre à définir la séquence de positions suivante lorsqu'il est entraîné en rotation dans un sens donné :
- une position "dérivation" (P1), en laquelle la première sortie (18) est ouverte ;
- une position "radiateur + dérivation" (P2 ; P3), en laquelle la première sortie (18) et la deuxième sortie (20) sont ouvertes ;
- une position "radiateur" (P9 ; P10'), en laquelle la deuxième sortie (20) est ouverte ;
- une position "radiateur + aérotherme" (P4 ; P10), en laquelle la deuxième sortie (20) et la ou les troisièmes sorties (22) sont ouvertes ;
- une position "radiateur + dérivation + aérotherme" (P6 ; P7), en laquelle la première sortie (18), la deuxième sortie (20) et la ou les troisièmes sorties (22) sont ouvertes ;
- une position "aérotherme + dérivation" (P5), en laquelle la première sortie (18) et la ou les troisièmes sorties (22) sont ouvertes ; et
- une position "aérotherme" (P5' ; P8), en laquelle la ou les troisièmes sorties (22) sont ouvertes.

2. Vanne de commande selon la revendication 1, **caractérisée en ce que** l'organe de réglage est propre à prendre en outre une position "débit nul" (P0; P0'), en laquelle aucune sortie n'est ouverte.

3. Vanne de commande selon l'une des revendications 1 et 2, **caractérisée en ce que** l'organe de réglage est propre à prendre en outre une position "sécurité" (P10) qui correspond à la position "radiateur + aérotherme", en laquelle la deuxième sortie (20) et la ou les troisièmes sorties (22) sont ouvertes.

4. Vanne de commande selon l'une des revendications 1 à 3, **caractérisée en ce que** l'organe de réglage est propre à prendre en outre une position "sécurité" (P10') qui correspond à la position "radiateur", en laquelle la deuxième sortie (20) est ouverte.

5. Vanne de commande selon l'une des revendications 1 à 4, **caractérisée en ce qu'**elle comprend des moyens de commande propres à amener l'organe de réglage (34) :
soit dans l'une des positions : "dérivation" (P1), "radiateur + dérivation", "radiateur" (P9), lorsqu'un mode sans chauffage est désiré,
soit dans l'une des positions : "radiateur + aérotherme" (P4 ; P10), "radiateur + dérivation + aérotherme", "aérotherme + dérivation" (P5), "aérotherme" (P5' ; P8), lorsqu'un mode avec chauffage est désiré.

6. Vanne de commande selon l'une des revendications 1 à 5, **caractérisée en ce que** les sorties de fluide (18, 20, 22) débouchent dans le corps (12) par des ouvertures de formes et de dimensions choisies, aménagées en des emplacements choisis dudit corps (12).

7. Vanne de commande selon la revendication 6, **caractérisée en ce que** les ouvertures des sorties de fluide (18, 20, 22) sont de forme générale circulaire et. ont des diamètres différents.

8. Vanne de commande selon l'une des revendications 1 à 7, **caractérisée en ce que** le corps (12) comprend une paroi latérale cylindrique (16) dans laquelle débouchent les sorties de fluide (18, 20, 22) à des hauteurs axiales et en des positions angulaires choisies par rapport à l'axe de rotation (XX) de l'organe de réglage (34), tandis que l'entrée de fluide (28) débouche axialement dans le corps (12).

9. Vanne de commande selon la revendication 8, **caractérisée en ce que** l'organe de réglage (34) est réalisé sous la forme d'un cylindre creux comprenant des ouvertures de passage (40, 46, 48) propres à contrôler les sorties de fluide (18, 20, 22) en fonction de la position angulaire de l'organe de réglage (34) par rapport au corps (12).

10. Vanne de commande selon l'une des revendications 1 à 9, **caractérisée en ce qu'**elle comprend des moyens de motorisation (MPP) propres à entraîner l'organe de réglage (34) pour l'amener dans des positions angulaires choisies par rapport au corps de vanne (12).

11. Circuit de refroidissement d'un moteur thermique (62) de véhicule automobile, qui est parcouru par un fluide de refroidissement sous l'action d'une pompe de circulation (64 ; 66), **caractérisé en ce qu'**il comprend une vanne de commande (10) selon l'une des revendications 1 à 10, dont l'entrée de fluide (28) est reliée à une arrivée (68) de fluide de refroidissement en provenance du moteur (62) et dont les première sortie de fluide (18), deuxième sortie de fluide (20) et la ou les troisièmes sorties de fluide (22) sont reliées respectivement à une première branche (70) qui contient le radiateur de refroidissement (72) du moteur (62), une deuxième branche (76) qui constitue une dérivation du radiateur de refroidissement (72) du moteur, et une ou des troisièmes branches (78) qui contiennent chacune au moins un aérotherme (80) pour le chauffage de l'habitacle.

12. Circuit de refroidissement selon la revendication 11, **caractérisé en ce qu'**il comprend une pompe de circulation mécanique (64) entraînée par le moteur (62).

13. Circuit de refroidissement selon l'une des revendications 11 et 12, **caractérisé en ce qu'**il comprend une pompe de circulation électrique (66) susceptible d'être actionnée par des moyens de commande.

14. Circuit de refroidissement selon la revendication 13, **caractérisé en ce que** la pompe de circulation électrique (66) est intercalée sur la troisième branche (78) qui contient l'aérotherme (80), et **en ce que** les moyens de commande sont propres à actionner la pompe de circulation électrique (66) dans l'une des positions suivantes : position "aérotherme", position "radiateur + aérotherme" et position "radiateur + dérivation + aérotherme".

## Patentansprüche

1. Regelventil, das geeignet ist, um Teil eines Kühlkreislaufs eines Wärmemotors eines Kraftfahrzeugs zu sein, wobei der Kreislauf von einem Kühlfluid durchflossen wird und einen ersten Zweig (70), der den Kühler (72) des Motors (62) enthält, einen zweiten Zweig (76), der eine Umgehung des Kühlers (72) des Motors bildet, und einen oder mehrere dritte Zweige (78) aufweist, die je mindestens einen Luftheizer (80) zum Heizen des Fahrzeuginnenraums enthalten, wobei das Ventil (10) einen Körper mit einem Fluideingang (28), einem ersten Ausgang (18), der mit dem zweiten Zweig (76) verbunden sein kann, einem zweiten Ausgang (20), der mit dem ersten Zweig (70) verbunden sein kann, und einem oder mehreren dritten Ausgängen (22), die mit dem oder den dritten Zweig(en) (78) verbunden sein können, sowie ein Einstellglied (34) aufweist, das drehend im Ventilkörper montiert ist, um die Ausgänge (18, 20, 22) selektiv zu steuern, **dadurch gekennzeichnet, dass** das Einstellglied (34) geeignet ist, um die folgende Reihenfolge von Positionen zu definieren, wenn es in einer gegebenen Richtung in Drehung versetzt wird:
- eine Position "Umgehung" (P1), in der der erste Ausgang (18) offen ist;
- eine Position "Kühler + Umgehung" (P2; P3), in der der erste Ausgang (18) und der zweite Ausgang (20) offen sind;
- eine Position "Kühler" (P9; P10'), in der der zweite Ausgang (20) offen ist;
- eine Position "Kühler + Luftheizer" (P4; P10), in der der zweite Ausgang (20) und der oder die dritten Ausgänge (22) offen sind;
- eine Position "Kühler + Umgehung + Luftheizer" (P6; P7), in der der erste Ausgang (18), der zweite Ausgang (20) und der oder die dritten Ausgänge (22) offen sind;
- eine Position "Luftheizer + Umgehung" (P5), in der der erste Ausgang (18) und der oder die dritten Ausgänge (22) offen sind; und
- eine Position "Luftheizer" (P5'; P8), in der der oder die dritten Ausgänge (22) offen sind.

2. Regelventil nach Anspruch 1, **dadurch gekennzeichnet, dass** das Einstellglied geeignet ist, um außerdem eine Position "Durchflussmenge Null" (P0; P0') einzunehmen, in der kein Ausgang geöffnet ist.

3. Regelventil nach einem der Ansprüche 1 und 2, **dadurch gekennzeichnet, dass** das Einstellglied geeignet ist, um außerdem eine Position "Sicherheit" (P10) einzunehmen, die der Position "Kühler + Luftheizer" entspricht, in der der zweite Ausgang (20) und der oder die dritten Ausgänge (22) geöffnet sind.

4. Regelventil nach einem der Ansprüche 1 bis 3, **dadurch gekennzeichnet, dass** das Einstellglied geeignet ist, außerdem eine Position "Sicherheit" (P10') einzunehmen, die der Position "Kühler" entspricht, in der der zweite Ausgang (20) geöffnet ist.

5. Regelventil nach einem der Ansprüche 1 bis 4, **dadurch gekennzeichnet, dass** es Steuermittel aufweist, die geeignet sind, um das Einstellglied (34):
entweder in eine der Positionen "Umgehung" (P1), "Kühler + Umgehung", "Kühler" (P9) zu bringen, wenn ein Betriebsmodus ohne Heizen gewünscht ist,
oder in eine der Positionen "Kühler + Luftheizer" (P4; P10), "Kühler + Umgehung + Luftheizer", "Luftheizer + Umgehung" (P5), "Luftheizer" (P5'; P8) zu bringen, wenn ein Betriebsmodus mit Heizen gewünscht ist.

6. Regelventil nach einem der Ansprüche 1 bis 5, **dadurch gekennzeichnet, dass** die Fluidausgänge (18, 20, 22) in den Körper (12) über Öffnungen mit ausgewählten Formen und Abmessungen münden, die an ausgewählten Stellen des Körpers (12) ausgebildet sind.

7. Regelventil nach Anspruch 6, **dadurch gekennzeichnet, dass** die Öffnungen der Fluidausgänge (18, 20, 22) allgemein kreisförmig sind und unterschiedliche Durchmesser aufweisen.

8. Regelventil nach einem der Ansprüche 1 bis 7, **dadurch gekennzeichnet, dass** der Körper (12) eine zylindrische Seitenwand (16) aufweist, in die die Fluidausgänge (18, 20, 22) auf ausgewählten axialen Höhen und Winkelpositionen bezüglich der Drehachse (XX) des Einstellglieds (34) münden, während der Fluideingang (28) axial in den Körper (12) mündet.

9. Regelventil nach Anspruch 8, **dadurch gekennzeichnet, dass** das Einstellglied (34) in Form eines Hohlzylinders hergestellt ist, der Durchgangsöffnungen (40, 46, 48) aufweist, die geeignet sind, um die Fluidausgänge (18, 20, 22) in Abhängigkeit von der Winkelposition des Einstellglieds (34) bezüglich des Körpers (12) zu steuern.

10. Regelventil nach einem der Ansprüche 1 bis 9, **dadurch gekennzeichnet, dass** es Antriebsmittel (MPP) aufweist, die geeignet sind, um das Einstellglied (34) anzutreiben, um es in ausgewählte Winkelpositionen bezüglich des Ventilkörpers (12) zu bringen.

11. Kühlkreislauf eines Wärmemotors (62) eines Kraftfahrzeugs, der unter der Wirkung einer Umlaufpumpe (64; 66) von einem Kühlfluid durchflossen wird, **dadurch gekennzeichnet, dass** er ein Regelventil (10) nach einem der Ansprüche 1 bis 10 aufweist, dessen Fluideingang (28) mit einer Kühlfluidzufuhr (68) vom Motor (62) verbunden ist, und dessen erster Fluidausgang (18), zweiter Fluidausgang (20) und dritter oder dritte Fluidausgänge (22) je mit einem ersten Zweig (70), der den Kühler (72) des Motors (62) enthält, einem zweiten Zweig (76), der eine Umgehung des Kühlers (72) des Motors bildet, und einem oder dritten Zweigen (78) verbunden sind, die je mindestens einen Luftheizer (80) für die Heizung des Fahrzeuginnenraums aufweisen.

12. Kühlkreislauf nach Anspruch 11, **dadurch gekennzeichnet, dass** er eine mechanische Umlaufpumpe (64) aufweist, die vom Motor (62) angetrieben wird.

13. Kühlkreislauf nach einem der Ansprüche 11 und 12, **dadurch gekennzeichnet, dass** er eine elektrische Umlaufpumpe (66) aufweist, die von Steuermitteln betätigt werden kann.

14. Kühlkreislauf nach Anspruch 13, **dadurch gekennzeichnet, dass** die elektrische Umlaufpumpe (66) auf den dritten Zweig (78) zwischengeschaltet ist, der den Luftheizer (80) enthält, und dass die Steuermittel geeignet sind, um die elektrische Umlaufpumpe (66) in einer der folgenden Positionen zu betätigen: Position "Luftheizer", Position "Kühler + Luftheizer" und Position "Kühler + Umgehung + Luftheizer".

## Claims

1. Control valve able to form part of a motor vehicle combustion engine cooling circuit, the circuit having, passing through it, a cooling fluid and comprising a first branch (70) which contains the cooling radiator (72) for cooling the engine (62), a second branch (76) which constitutes a bypass of the engine cooling radiator (72), and one or more third branches (78) each containing at least one unit heater (80) for heating the cabin, the valve (10) comprising a body having a fluid inlet (28), a first outlet (18) that can be connected to the second branch (76), a second outlet (20) that can be connected to the first branch (70) and one or more third outlets (22) that can be connected to the third branch or branches (78), together with a regulating member (34) mounted such that it can turn in the body of the valve in order selectively to control the outlets (18, 20, 22), **characterized in that** the regulating member (34) is able to define the following sequence of positions when rotated in a given direction:
- a "bypass" position (P1) in which the first outlet (18) is open;
- a "radiator + bypass" position (P2; P3) in which the first outlet (18) and the second outlet (20) are open;
- a "radiator" position (P9; P10') in which the second outlet (20) is open;
- a "radiator + unit heater" position (P4; P10) in which the second outlet (20) and the third outlet or outlets (22) are open;
- a "radiator + bypass + unit heater" position (P6; P7) in which the first outlet (18), the second outlet (20) and the third outlet or outlets (22) are open;
- a "unit heater + bypass" position (P5) in which the first outlet (18) and the third outlet or outlets (22) are open; and
- a "unit heater" position (P5'; P8) in which the third outlet or outlets (22) are open.

2. Control valve according to Claim 1, **characterized in that** the regulating member is also able to adopt a "zero throughput" position (P0; P0') in which no outlet is open.

3. Control valve according to one of Claims 1 and 2, **characterized in that** the regulating member is able also to adopt a "safety" position (P10) which corresponds to the "radiator + unit heater" position in which the second outlet (20) and the third outlet or outlets (22) are open.

4. Control valve according to one of Claims 1 to 3, **characterized in that** the regulating member is able also to adopt a "safety" position (P10') which corresponds to the "radiator" position in which the second outlet (20) is open.

5. Control valve according to one of Claims 1 to 4, **characterized in that** it comprises control means able to bring the regulating member (34):
either into one of the following positions: "bypass" (P1); "radiator + bypass"; "radiator" (P9); when a mode without heating is desired,
or into one of the following positions: "radiator + unit heater" (P4; P10); "radiator + bypass + unit heater"; "unit heater + bypass" (P5); "unit heater" (P5'; P8); when a mode with heating is desired.

6. Control valve according to one of Claims 1 to 5, **characterized in that** the fluid outlets (18, 20, 22) open into the body (12) via openings of chosen shapes and sizes formed at chosen locations of said body (12).

7. Control valve according to Claim 6, **characterized in that** the fluid outlet openings (18, 20, 22) are of circular overall shape and have different diameters.

8. Control valve according to one of Claims 1 to 7, **characterized in that** the body (12) comprises a cylindrical side wall (16) into which the fluid outlets (18, 20, 22) open at chosen axial heights and chosen angular positions with respect to the axis of rotation (XX) of the regulating member (34) while the fluid inlet (28) opens axially into the body (12).

9. Control valve according to Claim 8, **characterized in that** the.regulating member (34) is produced in the form of a hollow cylinder comprising passage openings (40, 46, 48) able to control the fluid outlets (18, 20, 22) according to the angular position of the regulating member (34) with respect to the body (12).

10. Control valve according to one of Claims 1 to 9, **characterized in that** it comprises motorizing means (MPP) able to drive the regulating member (34) to bring it into chosen angular positions with respect to the valve body (12).

11. Cooling circuit for cooling a motor vehicle combustion engine (62), through which there passes a cooling fluid under the action of a circulation pump (64; 66), **characterized in that** it comprises a control valve (10) according to one of Claims 1 to 10, the fluid inlet (28) of which is connected to a supply (68) of cooling fluid from the engine (62) and the first (18), second (20) and singular or plural third (22) fluid outlets of which are respectively connected to a first branch (70) which contains the cooling radiator (72) for cooling the engine (62), to a second branch (76) which constitutes a bypass of the engine cooling radiator (72) and to one or more third branches (78) each of which contains at least one unit heater (80) for heating the cabin.

12. Cooling circuit according to Claim 11, **characterized in that** it comprises a mechanical circulation pump (64) driven by the engine (62).

13. Cooling circuit according to one of Claims 11 and 12, **characterized in that** it comprises an electric circulating pump (66) that can be actuated by control means.

14. Cooling circuit according to Claim 13, **characterized in that** the electric circulating pump (66) is fitted on the third branch (78) which contains the unit heater (80), and **in that** the control means are able to actuate the electric circulating pump (66) in one of the following positions: the "unit heater" position; the "radiator + unit heater" position; and the "radiator + bypass + unit heater" position.
